# EUROPÄISCHE PATENTSCHRIFT

(11) **EP 0 302 246 B1**
(45) Veröffentlichungstag und Bekanntmachung des Hinweises auf die Patenterteilung: **27.01.1993**
(21) Anmeldenummer: 88110795.7
(22) Anmeldetag: 06.07.1988
(51) Int. Cl.: H04Q 11/04, H04M 11/06

(54) **Kommunikationssystem mit einem ISDN-Endgeräteanschluss für unterschiedliche ISDN-Schnittstellen in einem ISDN-Vermittlungseinrichtungsnetz**
Communication system with an ISDN terminal connector for different ISDN interfaces in an ISDN switching network
Système de communication avec un connecteur terminal RNIS pour différentes interfaces RNIS dans un réseau de commutation RNIS

(30) Priorität: 04.08.1987 DE 3725841
(43) Veröffentlichungstag der Anmeldung: 08.02.1989
(73) Patentinhaber: SIEMENS AKTIENGESELLSCHAFT, 80333 München (DE)
(72) Erfinder: Völzke, Eckhard, Dipl.-Ing., D-8022 Grünwald (DE)

(56) Entgegenhaltungen:
- EP-A- 0 151 433
- DE-A- 3 007 766
- TELCOM REPORT, Band 8, Nr. 6, November-Dezember 1985, Seiten 373-366, Frankfurt, DE; B. MÜLLER: "Flexibles IOM-Konzept für ISDN-Telekommunikationsbausteine"
- SEVENTH INTERNATIONAL TELECOMMUNICATIONS ENERGY CONFERENCE "INTELEC '85", München, 14.-17. Oktober 1985, Seiten 521-525; D. KLEIN et al.: "The power supply of supplementary equipment at the ISDN-telephoneset"

## Beschreibung

Die Erfindung betrifft ein Kommunikationssystem mit einer digitalen, diensteintegrierenden Vermittlungseinrichtung und mit zweidrähtigen, ISDN-Übertragungs- (U) und vierdrähtigen, standardisierten ISDN-Bus (S)-Schnittstellen und mit ISDN-Endgeräten die jeweils entweder über eine Schicht 1-Funktionen des OSI-Referenzmodells für ein integriertes Übertragungsverfahren realisierende ISDN-Übertragungsabschlußeinrichtung an eine ISDN-Übertragungsschnittstelle oder über eine die Schicht 1-Funktionen des OSI-Referenzmodell für eine integrierte ISDN-Bus-Schnittstelle realisierende ISDN-Bus-Abschlußeinrichtung an eine ISDN-Bus-Schnittstelle angeschlossen werden, wobei die ISDN-Bus-Abschlußeinrichtung über einen hierfür vorgesehenen Steuereingang entweder in eine die vermittlungseinrichtungsseitig Schicht 1-Funktionen oder die ISDN-endgeräteseitig Schicht 1-Funktionen realisierende Betriebsart umsteuerbar ist und vermittlungseinrichtungsseitig eine für die über eine Anschlußleitung geführte Fernstromversorgung der ISDN-Endeinrichtung vorgesehene Stromquelle direkt an die beiden Leitungen der zweidrähtigen Schnittstelle oder an den Phantomkreis der vierdrähtigen ISDN-Bus-Schnittstelle angekoppelt wird.

In der CCITT-Empfehlung I.411 sind die Referenzkonfigurationen für Teilnehmeranschlüsse an für diensteintegrierende, digitale Fernmeldenetze - im weiteren mit ISDN-Netz bezeichnet - festgelegt. Danach wird ein ISDN-Endgerät über eine Anschlußleitung und entweder über eine Netzabschlußeinrichtung NT1 (ISDN-Hauptanschluß) oder über eine Serienschaltung aus je einer Netzabschlußeinrichtungen NT1 und NT2 an eine öffentliche ISDN-Vermittlungseinrichtung herangeführt (ISDN-Nebenanschluß). Der ISDN-Basis-Anschluß des ISDN-Endgerätes erfolgt über eine definierte ISDN-Bus-Schnittstelle - im weiteren mit Sₒ-Schnittstelle bezeichnet - an die Netzabschlußeinrichtung NT1 bzw. NT2. Die prinzipielle Struktur dieser vierdrähtigen Sₒ-Schnittstelle ist in der CCITT-Empfehlung I.412 festgelegt und die zu realisierenden Funktionen entsprechen der CCITT-Empfehlung I.430. Die zweite Netzabschlußeinrichtung NT2 kann gemäß der CCITT-Empfehlung I.411 durch eine ISDN-Nebenstellenanlage oder ein lokales Netzwerk realisiert sein. Dies bedeutet, daß ISDN-Endgeräte nach CCITT-Empfehlung I.430 generell über eine Sₒ-Schnittstelle - auch an eine ISDN-Nebenstellenanlage - anzuschließen sind.
Da die von den Sₒ-Schnittstellenleitungen maximal überbrückbare Entfernung- ca. 150 Meter - nicht ausreicht, weiter entfernte ISDN-Endgeräte an eine ISDN-Nebenstellenanlage anzuschließen, und da die in Nebenstellenanlagennetzen überwiegend zweidrähtig ausgeführten Anschlußleitungen zu den Endgeräten einen vierdrähtigen Anschluß einer Sₒ-Schnittstelle verhindern, müssen diese mittels geeigneter Übertragunseinrichtungen über die teils zweidrähtig vorhandenen Anschlußleitungen an die ISDN-Nebenstellenanlage herangeführt werden. Hierzu wird auf der Nebenanschlußleitung ein spezielles Übertragungsverfahren eingesetzt, daSₒ- abgesetzt in der Nähe des ISDN-EndgeräteSₒ- eine Übertragungsendeinrichtung bedingt. ISDN-nebenstellenanlagenseitig werden die zu übermittelnden Informationen aufbereitet und mittels des speziellen Übertragungsverfahrens über die Anschlußleitung an die abgesetzte Übertragungsendeinrichtung übertragen. In dieser werden die empfangenen Informationen regeneriert und so geformt, daß sie den Bedingungen der CCITT-Empfehlung I.430 - wie bereits erläutert - genügen, d.h. daß das ISDN-Endgerät über eine Sₒ-Schnittstelle an der ISDN-Nebenstellenanlage betrieben werden kann. Dies erfordert zusätzlich zur weiteren Übertragungsendeinrichtung eine Sₒ-Anpassungsfunktion. Diese muß jedem abgesetzten bzw. nur über eine zweidrähtige Anschlußleitung anschließbaren ISDN-Endgerät für den Anschluß an eine ISDN-Nebenstellenanlage zusammen mit der Übertragungsendeinrichtung als eine externe, aufwendige Anschlußeinrichtung - im folgenden mit PT (private network termination)-Einrichtung bezeichnet - beigestellt werden.

Eine Möglichkeit, eine PT-Einrichtung in der jeweiligen Nebenanschlußleitung zu vermeiden, besteht darin, die PT-Einrichtungsfunktionen in das jeweilige ISDN-Endgerät zu integrieren. Ein derartiges 'Uₒ-ISDN-Endgerät' kann beispielsweise eine ISDN-Telefoneinrichtung sein. Die dabei im 'Uₒ-ISDN-Endgerät' zu implementierende Schnittstelle 'ISDN-Endgerät-Anschlußleitung' ist eine Übertragungsschnittstelle. Wird diese Übertragungsschnittstelle zweidrähtig ausgelegt, so ergibt sich in Analogie zum ISDN-Hauptanschluß eine U-Schnittstelle, die am Nebenanschluß als Uₒ-Schnittstelle bezeichnet wird. Für eine zweidrähtige Übertragung von Informationen über die Nebenanschlußleitungen beziehungsweise über die Uₒ-Schnittstelle sind mehrere Übertragungsverfahren bekannt. Vorzugsweise sind dies die vielfach in öffentlichen ISDN-Netzen eingesetzte Zweidraht-Duplex-Übertragung mit Echokompensation - beispielsweise für den Bereich der Deutschen Bundespost in der FTZ-Richtlinie 1 R 220 festgelegt - sowie das in Nebenstellenanlagennetzen bevorzugte Zeitgetrenntlage- bzw. Burstverfahren.

Eine Uₒ-Schnittstelle ist in einem Uₒ-ISDN-Endgerät zu einer Uₒ- Abschlußeinrichtung geführt. Diese realisiert die Schicht 1-Funktionen entsprechend dem OSI-Referenzmodell sowie weitere übertragungstechnische und elektrische Funktionen. Im einzelnen sind dies beispielsweise die Impedanzanpassung der Übertragungseinrichtung, die Bit- und Rahmen-Synchronisierung, die Stromversorgungseinspeisung sowie Funktionen zur Fehlereingrenzung wie beispielsweise Prüfschleifen. Diese Uₒ-Abschlußeinrichtung weist innerhalb des ISDN-Endgerätes eine in unterschiedlichen Realisierungen bekannte interne ISDN-Schnittstelle auf, die zu den weiterverarbeitenden Einheiten eines Uₒ-ISDN-Endgerätes geführt ist. Im wesentlichen stellt diese Schnittstelle eine funktionelle Grenze zwischen Schicht 1 und Schicht 2 des ISDN-Signalisierungsprotokolls für Teilnehmeranschlüsse (D-Kanal-Protokoll) dar.

In einem ISDN-Endgerät ist die Sₒ-Schnittstelle - in Analogie zum Uₒ-ISDN-Endgerät - zu einer Sₒ-Abschlußeinrichtung geführt. Die Sₒ-Abschlußeinrichtung realisiert die Schicht 1-Funktionen für eine 4-drähtige Sₒ-Schnittstelle. Im wesentlichen entsprechen diese Funktionen denen der Uₒ-Schnittstelle. Die Sₒ-Schnittstelle weist jedoch zusätzliche Funktionen für einen Bus-Betrieb mehrerer Sₒ-ISDN-Endgeräte an einem Sₒ-Anschluß - öffentliches ISDN-Netz oder ISDN-Nebenstellenanlage - auf. Vermittlungseinrichtungsseitig sind der Sₒ-Schnittstelle Bus-Verwalter und ISDN-endgeräteseitig dagegen Bus-Benutzer-Funktionen zugeordnet. Die Unterschiede ergeben sich in den Prozeduren für die Zugriffsteuerung. Typischerweise verfügt die Sₒ-Abschlußeinrichtung über einen Steuereingang, über den sie auf eine vermittlungseinrichtungsseitige bzw. auf eine ISDN-endgeräteseitige Betriebsart einstellbar ist. Innerhalb eines ISDN-Endgerätes weist eine Sₒ-Abschlußeinrichtung eine der Uₒ-Abschlußeinrichtung entsprechende bzw. gleichartige interne ISDN-Schnittstelle auf, die ebenfalls zu den weiterverarbeitenden Einheiten eines ISDN-Endgerätes geführt ist.

Aus der veröffentlichten europäischen Patentanmeldung 0 151 433 ist desweiteren eine Gerätekonfiguration bekannt, bei der eine Netzabschlußeinrichtung mit einer als Kommunikationsendgerät ausgebildeten Abfrageeinrichtung kombiniert ist. Hierdurch wird bewirkt, daß über eine an der Netzabschlußeinrichtung angeordnete ISDN-Bus-Schnittstelle mehrere Kommunikationsendgeräte anschließbar sind und über diese ISDN-Bus-Schnittstelle zusätzlich zum Amtsverkehr, Internverkehr sowie Teilnehmermerkmalsteuerungen, wie z. B. Rückfrage, möglich sind.

Um in den ISDN-Endgeräten eine beispielsweise Basis-Sprachkommunikation unabhängig von einer äußeren Energieversorgung zu gewährleisten, müssen diese über die Anschlußleitung - wie auch in herkömmlichen Fernsprechnetzen - mit Strom bzw. Spannung versorgt werden. Hierzu wird vermittlungseinrichtungsnetzseitig - beispielsweise in einer ISDN-Nebenstellenanlage - die Stromquelle bei zweidrähtiger Uₒ-Schnittstelle direkt an die beiden Leitungen und bei einer vierdrähtigen Sₒ-Schnittstelle an einen hierfür gebildeten Phantomkreis angekoppelt. Ein Phantomkreis und die Ankopplung der Stromquelle an den Phantomkreis ist in der CCITT-Empfehlung I.430 detailliert dargestellt.

Generell gilt, daß ein ISDN-Endgerät in Abhängigkeit der vorliegenden ISDN-Netz-Schnittstelle entweder über eine Uₒ- oder eine Sₒ-Schnittstelle an eine ISDN-Vermittlungseinrichtung angeschlossen werden muß.

Der Erfindung liegt die Aufgabe zugrunde, ein ISDN-Endgerät mit möglichst geringem zusätzlichem Aufwand mit einer derart umfassenden Portabilität auszustatten, daß es in eine beliebige ISDN-Umwelt einfügbar ist. Die Aufgabe wird basierend auf dem eingangs beschriebenen Kommunikationssystem durch die kennzeichnenden Merkmale des Anspruchs 1 gelöst.

Der wesentliche Erfindungsgedanke ist darin zu sehen, daß dem ISDN-Endgerät eine ISDN-Übertragungsabschlußeinrichtung und eine ISDN-Bus-Abschlußeinrichtung zugeordnet ist - im ISDN-Endgerät oder in einer externen Anschlußeinrichtung - und im Endgerät ein einziger ISDN-Schnittstellenanschluß vorgesehen ist, an den wechselseitig eine vermittlungseinrichtungsseitige ISDN-Übertragungs- oder ISDN-Bus-Schnittstelle anschließbar ist, wobei mittels einer Detektoreinrichtung, die feststellt ob eine Uₒ-und eine Sₒ-Schnittstelle aktuell angeschaltet ist, und mittels von der Detektoreinrichtung gesteuerter Schaltmittel - zum Beispiel Relais - die entsprechende Abschlußeinrichtung an die an das ISDN-Endgerät aktuell angeschaltete ISDN-Schnittstelle gesteuert wird.

Um die Art der angeschalteten Schnittstelle (Uₒ oder Sₒ) und damit die Art der Ankopplung der Stromquelle ermitteln zu können, kann die Detektoreinrichtung - siehe Patentanspruch 2 - direkt mit den Leitern einer Uₒ-Schnittstelle und dem Phantomkreis einer Sₒ-Schnittstelle verbunden werden. Bei dieser vorteilhaften Art des Anschaltens der Detektoreinrichtung kann die vermittlungseinrichtungsseitige Ankopplung einer Stromquelle mit einfachen Spannungs-, Strom- oder Widerstandsmessungen detektiert werden - siehe Anspruch 4 -. Eine Ankopplung der Detektoreinrichtung an beispielsweise einer anderen Stelle des Phantomkreises oder über Optokoppler ist ebenfalls möglich, bedeutet jedoch zusätzlichen Aufwand entweder bei der Ankopplung der Detektoreinrichtung oder bei der Messung der Ankoppelart der Stromquelle.

Eine weitere vorteilhafte Weiterbildung gemäß Patentanspruch 3 zeigt eine spezielle konstruktive Ausgestaltung der ISDN-Schnittstellen. Durch die Verwendung gleichartig aufgebauter Steckverbindungen bzw. Steckanschlüsse - d.h. eine Steckdoseneinrichtung, in die gleichartig realisierte Stecker einsteckbar sind - sowohl vermittlungseinrichtungsseitig als auch ISDN-endgeräteseitig kann der einzige ISDN-Schnittstellenanschluß besonders vorteilhaft ausgestaltet werden.

Eine wesentliche vorteilhafte Weiterbildung der Erfindung gemäß Patentanspruch 4 zeigt eine Möglichkeit, mit den bereits vorhandenen Einrichtungen - wie der Detektoreinrichtung einschließlich deren Anschluß an eine ISDN-Schnittstelle und die ISDN-Abschlußeinrichtungen - sowie mit wenigen zusätzlichen Mitteln, wie Schaltmitteln und einem zusätzlichen Steckanschluß für eine weitere Schnittstelle, eine an die ISDN-Endeinrichtung angeschaltete Uₒ-Schnittstelle zusätzlich in eine Sₒ-Schnittstelle umzusetzen und diese an einen zusätzlichen Steckanschluß im Sinne des Anschlusses weiterer ISDN-Endgeräte zu steuern. Durch das Anschalten einer zusätzlichen Stromquelle an den Phantomkreis der zusätzlich gebildeten Sₒ-Schnittstelle entspricht diese zusätzliche Schnittstelle der ISDN-vermittlungseinrichtungsseitigen Sₒ-Schnittstelle. Ein besonderer durch die Umsetzung erzielbarer Vorteil ist darin zu sehen, daß die nicht gegebene Busfähigkeit einer Uₒ-Schnittstelle eines ISDN-Anschlusses mit der zusätzlichen Sₒ-Schnittstelle wieder erlangt wird.

Eine weitere wesentliche vorteilhafte Weiterbildung der Erfindung gemäß Patentanspruch 6 zeigt das Durchschalten einer am ISDN-Endgerät angeschlossenen und detektierten Sₒ-Schnittstelle auf eine zusätzliche, dem ISDN-Endgerät zugeordneten Schnittstelle. Eine zusätzliche Ankopplung der Stromquelle an den Phantomkreis der galvanisch durchgeschalteten Sₒ-Schnittstelle ist nicht erforderlich, da die vermittlungseinrichtungsseitig angekoppelte Stromversorgung bis zur Sₒ-Schnittstelle der zusätzlichen Steckverbindung wirkt. Somit kann mittels der Kombination der vorteilhaften Weiterbildungen der Erfindung gemäß Patentanspruch 4 und 5 an einen zusätzlichen Steckanschluß entweder die in eine Sₒ-Schnittstelle umgesetzte Uₒ-Schnittstelle oder eine durchgeschaltete Sₒ-Schnittstelle gesteuert werden.

Nach einer weiteren vorteilhaften Weiterbildung der Erfindung gemäß Patentanspruch 7 sind die Detektoreinrichtung, die Schaltmittel, die ISDN-Abschlußeinrichtungen, eine zusätzliche Stromquelle und die Schnittstellen-Steckanschlüsse im ISDN-Endgerät integriert. Mit dieser Maßnahme wird erreicht, daß für den Anschluß an eine Uₒ-bzw. Sₒ-Schnittstelle gleichartig aufgebaute ISDN-Endgeräte eingesetzt werden können. Zusammen mit der automatischen Anschaltung der vorliegenden ISDN-Schnittstelle an die entsprechende Abschlußeinrichtung gemäß Anspruch 1 stellt diese vorteilhafte Ausgestaltung der Erfindung für einen ISDN-Benutzer eine wesentliche Erleichterung in der Handhabung eines ISDN-Endgerätes und eine wesentliche Steigerung der Portabilität eines ISDN-Endgerätes dar, da ISDN-Endgeräte jeweils über eine einzige in Normung befindliche Steckverbindung bzw. einen einzigen in Normung befindlichen Steckanschluß durch einfaches Stecken mit jeder der vermittlungseinrichtungsnetzseitigen ISDN-Schnittstellen verbindbar ist.

Im folgenden wird ein Ausführungsbeispiel der Erfindung anhand eines Blockschaltbildes näher erläutert.

Das Blockschaltbild zeigt die zur Erläuterung der Erfindung notwendigen Systemkomponenten eines ISDN-Endgerätes. Für dieses Ausführungsbeispiel sei vorausgesetzt, daß entweder
- von einer ISDN-Vermittlungseinrichtung (öffentliches Netz oder ISDN-Nebenstellenanlage) eine Sₒ-Schnittstelle Sₒ, die hinsichtlich ihrer Schnittstellenstruktur und Prozeduren der CCITT-Empfehlung I.430 entspricht,
- oder von einer Nebenstellenanlage, eine Uₒ-Schnittstelle Uₒ an ein ISDN-Endgerät TE herangeführt wird.

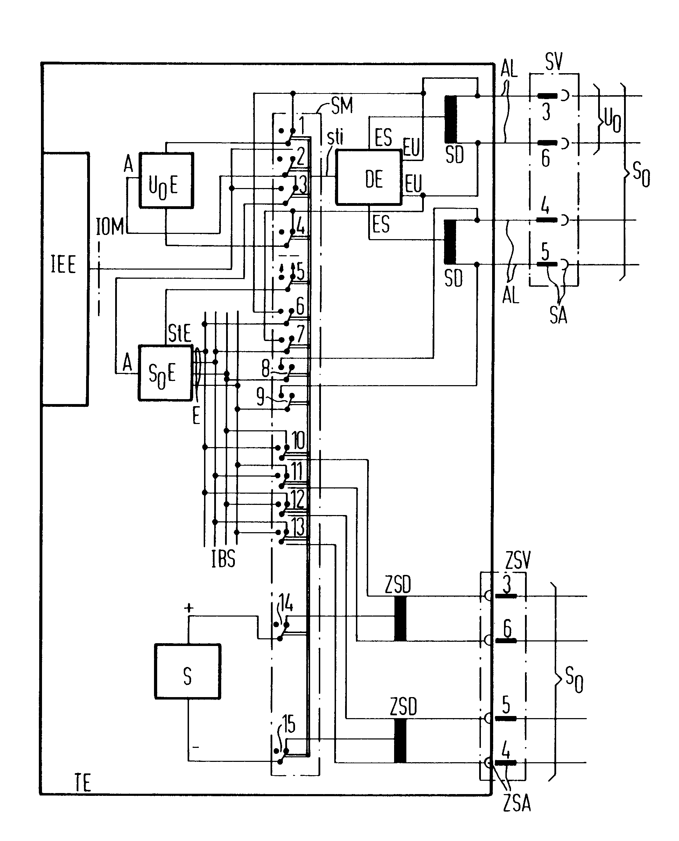

Sowohl die zweidrähtige Uₒ-Schnittstelle Uₒ als auch die vierdrähtige Sₒ- Schnittstelle Sₒ wird über eine gleichartig aufgebaute in Normung befindliche Steckverbindung SV und Anschlußleitungen AL an das ISDN-Endgerät TE angeschlossen. In der zweiteiligen Steckverbindung SV sind jeweils vermittlungsseitig und ISDN-endgeräteseitig mehrere Steckanschlüsse SA angeordnet. Hierbei wird die zweidrähtige Uₒ-Schnittstelle Uₒ beispielsweise über den dritten und sechsten Steckanschluß SA der Steckverbindung SV und die Sₒ-Schnittstelle Sₒ über den dritten bis sechsten Steckanschluß SA der Steckverbindung SV an das ISDN-Endgerät TE herangeführt. Die jeweils vom dritten und sechsten sowie vierten und fünften Steckanschluß SA kommenden Anschlußleitungen AL sind im ISDN-Endgerät TE mit jeweils einer Speisedrossel SD verbunden. Die Speisedrosseln SD dienen im wesentlichen dazu, mittels der in den Speisedrosseln SD angeordneten Mittelanzapfungen den Phantomkreis der vierdrähtigen Sₒ-Schnittstelle Sₒ auszukoppeln. Vermittlungseinrichtungsseitig sind ebenfalls gleichartig aufgebaute Speisedrosseln - in der Figur nicht dargestellt - an die vierdrähtige Sₒ-Schnittstelle Sₒ angeschlossen. An den Phantomkreis dieser beiden Speisedrosseln ist eine Stromquelle angeschlossen, mittels derer über die Anschlußleitungen eine Fernspeisung des ISDN-Endgerätes TE erfolgt. Im stromversorgten Betriebszustand der vermittlungsseitigen NT1 bzw. PT-Einrichtung ist die Stromquelle mit einer vorgegebenen Polarität an den Phantomkreis der Sₒ-Schnittstelle Sₒ angekoppelt. Bei Ausfall der unmittelbaren Stromversorgung der vermittlungsseitigen Einrichtungen (NT1 bzw. PT) - dies führt zu einer Fernspeisung mit verringerter Leistung aus der jeweiligen Vermittlungseinrichtung (Öffentliches ISDN-Netz bzw. ISDN-Nebenstellenanlage) und zu eingeschränktem ISDN-Endgeräte-Betrieb, beispielsweise beschränkt auf Telefonbetrieb - wird die Stromquelle vermittlungseinrichtungsseitig mit umgekehrter Polarität an den Phantomkreis der Sₒ-Schnittstelle Sₒ angekoppelt. Bei den zweidrähtigen Uₒ-Schnittstellen Uₒ wird die Stromquelle vermittlungseinrichtungsseitig direkt an die beiden Schnittstellenleitungen angekoppelt. Im ISDN-Endgerät TE werden nun sowohl die beiden Anschlußleiter, über die die Uₒ-Schnittstelle Uₒ an das ISDN-Endgerät TE herangeführt wird, als auch der ISDN-endgeräteseitig ausgekoppelte Phantomkreis der Sₒ-Schnittstelle Sₒ auf die entsprechenden Eingänge ES, EU einer Detektoreinrichtung DE geführt. In dieser Detektoreinrichtung DE wird mittels einfacher Spannungs-, Strom- oder Widerstandsmessung ermittelt, welche Art der vermittlungseinrichtungsseitigen Ankopplung der Stromquelle vorliegt; woraus sich eindeutig ergibt, welche der beiden Schnittstellen Uₒ, Sₒ aktuell an das ISDN-Endgerät TE angeschlossen ist. Beispielsweise kann in der Detektoreinrichtung DE die angekoppelte Stromquelle mittels einer einfachen Spannungsmessung zwischen den einzelnen Eingängen E der Detektoreinrichtung DE ermittelt werden. Bei angeschlossener Stromquelle übersteigt die gemessene Spannung einen vorgegebenen Schwellwert. Dieses Übersteigen wird beispielsweise in einer Vergleicherschaltung ausgewertet und angezeigt. Die Detektoreinrichtung DE ist durch einfache Kombination bekannter diskreter Bauelemente oder integrierter Schaltungen realisierbar. Anschließend wird in der Detektoreinrichtung DE eine den Uₒ- oder Sₒ-Schnittstellenanschluß anzeigende Steuerinformation sti gebildet und über eine entsprechende Verbindung an ein Schaltmittel SM weitergeleitet. Dieses Schaltmittel SM kann beispielsweise mittels Relais oder integrierter Schaltungen realisiert sein und muß mindestens fünfzehn Umschaltefunktionen aufweisen. Für das Ausführungsbeispiel sei angenommen, daß die fünfzehn Umschaltefunktionen durch fünfzehn Umschalte-Relaiskontaktsätze - im weiteren mit Umschalter bezeichnet - realisiert sind.

In der Figur sind die Umschalter in der Stellung dargestellt, in der sie bei Anschluß einer Uₒ-Schnittstelle Uₒ an das ISDN-Endgerät TE gesteuert sind. In der vorliegenden Schalterstellung werden über einen ersten und vierten Umschalter 1, 4 die mit der Uₒ-Schnittstelle verbundenen Anschlußleitungen AL über entsprechende Verbindungen an eine ISDN-Bus-Abschlußeinrichtung UₒE - im weiteren mit Uₒ-Abschlußeinrichtungen bezeichnet - verbunden. In dieser Uₒ-Abschlußeinrichtung sind die bereits erläuterten Schicht 1-Funktionen realisiert. Der Ausgang A der Uₒ Abschlußeinrichtung UₒE ist sowohl mit einem Umschaltekontakt eines zweiten Umschalters 2 als auch mit einem Umschaltkontakt eines dritten Umschalters 3 verbunden. Bei vorliegender Schalterstellung wird der Ausgang A der Uₒ-Abschlußeinrichtung UₒE sowohl auf einen Ausgang A einer ISDN-Bus-Abschlußeinrichtung - im weiteren mit Sₒ- Abschlußeinrichtung bezeichnet - als auch über eine interne ISDN-Schnittstelle IOM an die weiterverarbeitenden Einheiten IEE des ISDN-Endgerätes TE verbunden. In der Sₒ- Abschlußeinrichtung sind im wesentlichen die bereits erläuterten Schicht 1-Funktionen gemäß CCITT-Empfehlung I.430 realisiert. Ein an der Sₒ-Abschlußeinrichtung SₒE angeordneter Steuereingang STE ist über eine entsprechende Verbindung mit einem Mittenkontakt eines fünften Umschalters 5 verbunden. An die beiden Umschaltekontakte des fünften Umschalters 5 sind beispielsweise zwei unterschiedliche Spannungspotentiale herangeführt, mittels derer der Sₒ-Abschlußeinrichtung SₒE angezeigt wird, ob sie wie eine vermittlungseinrichtungsseitige oder eine ISDN-endgeräteseitige Sₒ-Abschlußeinrichtung SₒE - wie bereits erläutert - reagieren soll. Die eine Sₒ-Schnittstelle realisiernden Eingänge der Sₒ-Abschlußeinrichtung SₒE sind auf ein internes Bussystem IBS geführt. Mittels dieses Bussystems können sowohl über sechste bis neunte Umschalter 6 bis 9 die vier Anschlußleitungen AL bei Anschluß einer Sₒ-Schnittstelle Sₒ an die Eingänge E der Sₒ-Abschlußeinrichtung SₒE als auch die Eingänge der Sₒ-Abschlußeinrichtung SₒE über zehnte bis dreizehnte Umschalter 10 bis 13 und über zusätzliche Speisedrosseln ZSD an eine zusätzliche Steckverbindung ZSV gesteuert werden. Bei den dargestellten Schalterstellungen - bedeutet Anschluß einer Uₒ-Schnittstelle an das ISDN-Endgerät TE - wird die an den Eingängen E der Sₒ-Abschlußeinrichtung SₒE vorliegende Sₒ-Schnittstelle an die zusätzliche Steckverbindung ZSV des ISDN-Endgerätes TE geführt, wodurch am ISDN-Endgerät TE eine Sₒ-Schnittstelle Sₒ bereitgestellt wird. Um eine vermittlungseinrichtungsseitig äquivalente Sₒ-Schnittstelle Sₒ am ISDN-Endgerät TE zu erhalten, ist über einen vierzehnten und fünfzehnten Schalter 14, 15 eine Stromquelle S an die Mittelanzapfungen der zusätzlichen Speisedrosseln ZSD bzw. an den Phantomkreis der Sₒ-Schnittstelle Sₒ angekoppelt. Die Energie für die Stromquelle S kann aus beispielsweise dem ISDN-Endgerät TE zugeordneten Quellen wie Batterien sowie Netzstromversorgung oder mittels Fernspeisung über die an das ISDN-Endgerät TE angschlossene Uₒ-Schnittstelle Uₒ bereitgestellt werden. Die zusätzlichen Speisedrosseln ZSD entsprechen ebenfalls den Bedingungen der CCITT Empfehlung I.430. Bei der nicht dargestellten Stellung der Umschalter, die bei Anschluß einer Sₒ-Schnittstelle an das ISDN-Endgerät TE erreicht wird, werden die vier ankommenden Anschlußleitungen über die sechsten bis neunten Umschalter 6 bis 9 an die Sₒ-Abschlußeinrichtung SₒE und über die zehnten bis dreizehnten Umschalter 10, 13 zur zusätzlichen Steckverbindung ZSV gesteuert. Somit wird im Sinne der Erhaltung der Busfähigkeit der Sₒ-Schnittstelle diese an die zusätzliche Steckverbindung ZSV weitergeleitet und dort für den Anschluß eines weiteren ISDN-Endgerätes TE bereitgestellt. Ein Anschluß der ISDN-endgeräteseitig angeordneten Stromquelle S ist nicht erforderlich, da aufgrund des galvanischen Durchverbindens der Sₒ-Schnittstelle die vermittlungseinrichtungsseitig angeschlossene Stromquelle bis zur Sₒ-Schnittstelle der zusätzlichen Steckverbindung wirkt. Die ebenfalls zweiteilige zusätzliche Steckverbindung ZSV entspricht hinsichtlich der Konstruktion und der ISDN-endgeräteseitigen und externen Belegung der zusätzlichen Steckanschlüsse ZSA der eingangs beschriebenen Steckverbindung SV für den Anschluß einer Sₒ-Schnittstelle an ein ISDN-Endgerät TE.

## Patentansprüche

1. Kommunikationssystem mit einer digitalen, diensteintegrierenden Vermittlungseinrichtung und mit zweidrähtigen ISDN-Übertragungs- (U) und vierdrähtigen, standardisierten ISDN-Bus (S)-Schnittstellen und mit ISDN-Endgeräten, die jeweils entweder über eine Schicht 1-Funktionen des OSI-Referenzmodells für ein integriertes Übertragungsverfahren realisierende ISDN-Übertragungsabschlußeinrichtung an eine ISDN-Übertragungsschnittstelle oder über eine die Schicht 1-Funktionen des OSI-Referenzmodell für eine integrierte ISDN-Bus-Schnittstelle realisierende ISDN-Bus-Abschlußeinrichtung an eine ISDN-Bus-Schnittstellen angeschlossen werden, wobei die ISDN-Bus-Abschlußeinrichtung über einen hierfür vorgesehenen Steuereingang entweder in eine die vermittlungseinrichtungsseitig Schicht 1-Funktionen oder die ISDN-endgeräteseitig Schicht 1-Funktionen realisierende Betriebsart umsteuerbar ist und vermittlungseinrichtungsseitig eine für die über eine Anschlußleitung geführte Fernstromversorgung der ISDN-Endeinrichtung vorgesehene Stromquelle direkt an die beiden Leitungen der zweidrähtigen Schnittstelle oder an den Phantomkreis der vierdrähtigen ISDN-Bus-Schnittstelle angekoppelt ist,
**dadurch gekennzeichnet,** daß einem ISDN-Endgerät (TE) sowohl eine ISDN-Übertragungsabschlußeinrichtung (UₒE) als auch eine ISDN-Bus-Abschlußeinrichtung (SₒE) zugeordnet wird, daß das ISDN-Endgerät (TE) einen einzigen ISDN-Schnittstellenanschluß (SV) aufweist, an den wechselzeitig eine vermittlungseinrichtungsseitige ISDN-Übertragungs- (Uₒ) oder ISDN-Bus-Schnittstelle (Sₒ) anschließbar ist,
daß am ISDN-Schnittstellenanschluß (SV) mittels einer ISDN-endgeräteseitig angeordneten Detektoreinrichtung (DE) die aktuelle vermittlungsseitige Ankoppelart der Stromquelle ermittelt wird und daß in Abhängigkeit vom Detektionsergebnis mittels von der Detektoreinrichtung (DE) gesteuerter Schaltmittel (SM) entweder die ISDN-Bus-Abschlußeinrichtung (SₒE) oder die Übertragungsabschlußeinrichtung (UₒE) an den ISDN-Schnittstellenanschluß (SV) angeschaltet wird.

2. Kommunikationssystem nach Anspruch 1,
**dadurch gekennzeichnet,** daß die Detektoreinrichtung (DE) direkt mit den Leitungen einer im ISDN-Schnittstellenanschluß (SV) realisierten ISDN-Übertragungsschnittstelle (Uₒ) und mit dem Phantomkreis einer ISDN-Bus-Schnittstelle (Sₒ) verbunden ist.

3. Kommunikationssystem nach einem der vorhergehenden Ansprüche,
**dadurch gekennzeichnet,** daß der ISDN-Schnittstellenanschluß (SV) und die vermittlungseinrichtungsseitigen ISDN-Schnittstellen Uₒ, Sₒ durch gleichartig aufgebaute Steckverbindungen (SV) realisiert sind.

4. Kommunikationssystem nach einem der vorhergehenden Ansprüche,
**dadurch gekennzeichnet,** daß in der Detektoreinrichtung (DE) die vermittlungseinrichtungsseitige Ankopplung der Stromquelle (S) durch eine Strom-, Spannungs- oder Widerstandsmessung derart ermittelt wird, daß bei Unter- bzw. Überschreiten eines vorgegebenen Schwellwertes ein die Schaltmittel (SM) beeinflussendes Steuersignal (STI) gebildet wird.

5. Kommunikationssystem nach Anspruch 1,
**dadurch gekennzeichnet,** daß mit dem Anschalten der ISDN-Übertragungsabschlußeinrichtung (UₒE) an die ISDN-Übertragungsschnittstelle (Uₒ) mittels weiterer von der Detektoreinrichtung (DE) gesteuerter Schaltmittel (SM) die zu den weiteren Einheiten (IEE) des ISDN-Endgerätes (TE) führende interne ISDN-Schnittstelle parallel mit der zu den weiteren Einheiten (IEE) führenden internen ISDN-Schnittstelle (IOM) der ISDN-Bus-Abschlußeinrichtung (SₒE) verbunden wird, daß die Sende- und Empfangsleitungen (SL, EL) der ISDN-Bus-Schnittstelle (Sₒ) der ISDN-Bus-Abschlußeinrichtung (SₒE) sowie eine zusätzliche Stromquelle (S) mittels weiterer, von der Detektoreinrichtung (DE) gesteuerter Schaltmittel (SM) derart auf eine zusätzliche, im ISDN-Endgerät (TE) angeordneten Schnittstelle geführt werden, daß diese zusätzliche Schnittstelle eine ISDN-Bus-Schnittstelle (Sₒ) der digitalen, diensteintegrierenden (ISDN)-Vermittlungseinrichtung VE repräsentiert und daß die ISDN-Bus-Abschlußeinrichtung (SₒE) mittels weiterer von der Detektoreinrichtung (DE) gesteuerter Schaltmittel (SM) über den Steuereingang (STI) in eine die vermittlungseinrichtungsseitig Schicht 1-Funktionen realisierende Betriebsart gesteuert wird.

6. Kommunikationssystem nach Anspruch 1,
**dadurch gekennzeichnet,** daß mit dem Anschalten der ISDN-Bus-Abschlußeinrichtung (SₒE) an die ISDN-Bus-Schnittstelle (Sₒ) mittels von der Detektoreinrichtung (DE) gesteuertes Schaltmittel (SM) die ISDN-Bus-Schnittstelle (Sₒ) parallel auf eine zusätzliche, im ISDN-Endgerät (TE) angeordneten Schnittstelle derart geführt wird, daß diese zusätzliche Schnittstelle eine ISDN-Bus-Schnittstelle (Sₒ) des digitalen, diensteintegrierenden (ISDN)-Fernmeldenetzes repräsentiert und daß die ISDN-Bus-Abschlußeinrichtung (SₒE) mittels weiterer von der Detektoreinrichtung (DE) gesteuerter Schaltmittel (SM) über deren Steuereingang (STI) in eine die ISDN-endgeräteseitig Schicht 1-Funktionen realisierende Betriebsart gesteuert wird.

7. Kommunikationssystem nach einem der vorhergehenden Ansprüche,
**dadurch gekennzeichnet,** daß die Detektoreinrichtung (DE), die Schaltmittel (SM), die ISDN-Abschlußeinrichtungen (UₒE, SₒE), eine zusätzliche Stromquelle (S) sowie eine zusätzliche ISDN-Bus-Schnittstelle (Sₒ) im ISDN-Endgerät (TE) integriert sind.

8. Kommunikationssystem nach einem der vorhergehenden Ansprüche,
**dadurch gekennzeichnet,** daß die Schaltmittel durch Relais oder integrierte Schaltkreise realisierbar sind.

## Claims

1. Communications system having an integrated services digital switching device, and having two-wire ISDN transmission (U) interfaces and four-wire standardised ISDN bus (S) interfaces, and having ISDN terminals which are connected in each case either to an ISDN transmission interface via an ISDN transmission terminating device realising layer 1 functions of the OSI reference model for an integrated transmission procedure or to an ISDN bus interface via an ISDN bus terminating device realising the layer 1 functions of the OSI reference model for an integrated ISDN bus interface, in which the ISDN bus terminating device can be switched over by means of a control input provided for this purpose either into an operating mode realising the layer 1 functions at the switching device end or one realising the layer 1 functions at the ISDN terminal end, and at the switching device end a current source provided for the remote power supply of the ISDN terminal carried over a central office line is coupled directly to the two lines of the two-wire interface or to the phantom circuit of the four-wire ISDN bus interface, characterised in that both an ISDN transmission terminating device (UₒE) and an ISDN bus terminating device (SₒE) are assigned to an ISDN terminal (TE), in that the ISDN terminal (TE) has a single ISDN interface connector (SV) to which an ISDN transmission interface (Uₒ) or ISDN bus interface (Sₒ) can be connected alternately at the switching device end, in that the present coupling type of the current source at the switching end is determined at the ISDN interface connector (SV) by means of a detector device (DE) arranged at the ISDN terminal end, and in that either the ISDN bus terminating device (SₒE) or the transmission terminating device (UₒE) is connected to the ISDN interface connector (SV) depending on the result of detection by means of switch means (SM) controlled by the detector device (DE).

2. Communications system according to Claim 1, characterised in that the detector device (DE) is connected directly to the lines of an ISDN transmission interface (Uₒ) realised in the ISDN interface connector (SV) and to the phantom circuit of an ISDN bus interface

3. Communications system according to one of the preceding claims, characterised in that the ISDN interface connector (SV) and also the ISDN interfaces Uₒ, Sₒ at the switching device end are realised by plug connectors (SV) of identical construction.

4. Communications system according to one of the preceding claims, characterised in that the coupling of the current source (S) at the switching device end is determined in the detector device (DE) by measuring the current, voltage or resistance in such a way that a control signal (STI) influencing the switch means (SM) is formed if a predetermined threshold is not reached or is exceeded.

5. Communications system according to Claim 1, characterised in that upon the connection of the ISDN transmission terminating device (UₒE) to the ISDN transmission interface (Uₒ) by means of further switch means (SM) controlled by the detector device (DE), the internal ISDN interface leading to the further units (IEE) of the ISDN terminal (TE) is connected in parallel with the internal ISDN interface (IOM) of the ISDN bus terminating device (SₒE) leading to the further units (IEE), in that the transmission and reception lines (SL, EL) of the ISDN bus interface (Sₒ) of the ISDN bus terminating device (SₒE) as well as an additional current source (S) are connected by means of further switch means (SM) controlled by the detector device (DE) to an additional interface arranged in the ISDN terminal (TE) in such a way that said additional interface represents an ISDN bus interface (Sₒ) of the integrated services digital (ISDN) switching device VE, and in that the ISDN bus terminating device (SₒE) is driven into an operating mode realising layer 1 functions at the switching device end by means of further switch means (SM) controlled by the detector device (DE) via the control input (STI).

6. Communications system according to Claim 1, characterised in that upon the connection of the ISDN bus terminating device (SₒE) to the ISDN bus interface (Sₒ) by means of switch means (SM) controlled by the detector device (DE), the ISDN bus interface (Sₒ) is connected in parallel with an additional interface arranged in the ISDN terminal (TE) in such a way that said additional interface represents an ISDN bus interface (Sₒ) of the integrated services digital (ISDN) telecommunications network, and in that the ISDN bus terminating device (SₒE) is driven into an operating mode realising the layer 1 functions at the ISDN terminal end by means of further switch means (SM) controlled by the detector device (DE) via the control input (STI) thereof.

7. Communications system according to one of the preceding claims, characterised in that the detector device (DE), the switch means (SM), the ISDN terminating devices (UₒE, SₒE), an additional current source (S) and also an additional ISDN bus interface (Sₒ) are integrated in the ISDN terminal (TE).

8. Communications system according to one of the preceding claims, characterised in that the switch means are realised by relays or integrated circuits.

## Revendications

1. Système de communication comportant un dispositif de commutation numérique à intégration de services, et des interfaces bifilaires de transmission ISDN (U) et des interfaces quadrifilaires standardisées de bus ISDN (S) et des terminaux ISDN, qui sont raccordés respectivement soit par l'intermédiaire d'un dispositif de terminaison de transmission ISDN qui réalise des fonctions de la couche 1 du modèle de référence OSI pour un procédé de transmission intégré, à une interface de transmission ISDN, soit par l'intermédiaire d'un dispositif de terminaison de bus ISDN, qui réalise des fonctions de la couche 1 du modèle de référence OSI pour une interface de bus ISDN intégrée, à une interface de bus ISDN, et selon lequel la commande du dispositif de terminaison de bus ISDN peut être commutée soit sur le fonctionnement réalisant les fonctions de la couche 1 du côté du dispositif de commutation, soit sur un type de fonctionnement réalisant des fonctions de la couche 1 du côté du terminal ISDN, et, du côté du dispositif de commutation, une source de courant, qui est prévue pour l'alimentation en courant à distance, réalisée par l'intermédiaire d'une ligne de raccordement, du terminal ISDN est accouplée directement aux deux lignes de l'interface bifilaire ou au circuit fantôme de l'interface quadrifilaire du bus ISDN,
caractérisé par le fait
qu'à un terminal ISDN (TE) sont associés aussi bien un dispositif de terminaison de transmission ISDN (UₒE) qu'un dispositif de terminaison de bus ISDN (SₒE), que le terminal ISDN (TE) possède une seule borne d'interface ISDN (SV), à laquelle peuvent être raccordées alternativement une interface de transmission ISDN (Uₒ) ou une interface de bus ISDN (Sₒ), située du côté du dispositif de commutation,
qu'au niveau de la borne de l'interface (SV) et de l'interface ISDN, le type de couplage actuel côté commutation de la source de courant est déterminé au moyen d'un dispositif détecteur (DE) disposé du côté du terminal ISDN, et
qu'en fonction du résultat de la détection, soit le dispositif de terminaison du bus ISDN (SₒE), soit le dispositif de terminaison de transmission (UₒE) est raccordé à la borne (SV) de l'interface ISDN par l'intermédiaire de moyens de commutation (SM) commandés par le dispositif détecteur (DE).

2. Système de communication suivant la revendication 1, caractérisé par le fait que le dispositif détecteur (DE) est raccordé directement aux lignes d'une interface de transmission ISDN (Uₒ), réalisée dans la borne (SV) de l'interface ISDN, et au circuit fantôme d'une interface de bus ISDN (Uₒ).

3. Système de communication suivant l'une des revendications précédentes, caractérisé par le fait que la borne (SV) de l'interface ISDN et ces interfaces ISDN (Uₒ,Sₒ) situées du côté du dispositif de commutation sont constituées par des connecteurs (SV) de même constitution.

4. Système de communication suivant l'une des revendications précédentes, caractérisé par le fait que dans le dispositif détecteur (DE), le couplage de la source de courant (S), du côté du dispositif de commutation, est déterminé au moyen d'une mesure de courant, de tension ou de résistance de telle sorte qu'en cas de dépassement d'une valeur de seuil prédéterminée par valeurs inférieures ou par valeurs supérieures, un signal de commande (STI), qui influe sur les moyens de commutation (SM), est formé.

5. Système de communication suivant la revendication 1, caractérisé par le fait qu'avec le raccordement du dispositif de terminaison de transmission ISDN (UₒE) à l'interface de transmission ISDN (Uₒ), à l'aide d'autres moyens de commutation (SM) commandés par le dispositif détecteur (DE), l'interface ISDN interne, qui aboutit aux autres unités (IEE) du terminal ISDN (TE), est raccordée en parallèle avec l'interface ISDN interne (IOM), aboutissant aux autres unités (IEE), du dispositif de terminaison de bus ISDN (SₒE), que les lignes d'émission et de réception (SL,EL) de l'interface de bus ISDN (Sₒ) du dispositif de terminaison de bus ISDN (SₒE) ainsi qu'une source de courant supplémentaire (S) sont raccordées, par l'intermédiaire d'autres moyens de commutation (SM) commandés par le dispositif détecteur (DE), à une interface supplémentaire disposée dans le terminal ISDN (TE), de telle sorte que cette interface supplémentaire représente une interface de bus ISDN (Sₒ) du dispositif de commutation (ISDN) (VE) numérique à intégration de services, et que le dispositif de terminaison de bus ISDN (SₒE) est placé, par l'intermédiaire d'autres moyens de commutation (SM) commandés par le dispositif détecteur (DE), par l'intermédiaire de l'entrée de commande (STI), dans un type de fonctionnement qui réalise des fonctions de la couche 1 du côté du dispositif de commutation.

6. Système de communication suivant la revendication 1, caractérisé par le fait qu'avec le raccordement du dispositif de terminaison de bus ISDN (SₒE) à l'interface de bus ISDN (Sₒ) par l'intermédiaire de moyens de commutation (SM) commandés par le dispositif détecteur (DE), l'interface de bus ISDN (Sₒ) est raccordée en parallèle à une interface supplémentaire, raccordée dans le terminal ISDN (TE) de telle sorte que cette interface supplémentaire représente une interface de bus ISDN (Sₒ) du réseau de télécommunication (ISDN) numérique à intégration de services, et que le dispositif de terminaison de bus ISDN (SₒE) est commuté par l'intermédiaire d'autres moyens de commutation (SM) commandés par le dispositif détecteur (DE) et par l'intermédiaire de son entrée de commande (STI), dans un type de fonctionnement réalisant des fonctions de la couche 1 du côté du terminal ISDN.

7. Système de communication suivant l'une des revendications précédentes, caractérisé par le fait que le dispositif détecteur (DE), les moyens de commutation (SM), les dispositifs de terminaison ISDN (UₒE,SₒE), une source de courant supplémentaire (S) ainsi qu'une interface de bus ISDN supplémentaire (Sₒ) sont intégrés dans le terminal ISDN (TE).

8. Système de communication suivant l'une des revendications précédentes, caractérisé par le fait que les moyens de commutation peuvent être constitués par des relais ou des circuits intégrés.
